# EUROPEAN PATENT SPECIFICATION

(11) **EP 2 190 755 B1**
(45) Date of publication and mention of the grant of the patent: **15.06.2011**
(21) Application number: 08793834.6
(22) Date of filing: 08.08.2008
(51) Int. Cl.: B65D 47/26, B65D 75/58

(54) **FLUID VALVE**
FLUIDVENTIL
VANNE POUR FLUIDE

(30) Priority: 08.08.2007 NL 2000798
(43) Date of publication of application: 02.06.2010
(73) Proprietor: Trébuchet B.V., 6212 BG Maastricht (NL)
(72) Inventor: LAHAYE, René Louis Jean, B-3621 Rekem (BE)
(74) Representative: Ketelaars, Maarten F.J.M.
(86) International application number: PCT/NL2008/050542
(87) International publication number: WO 2009/020393

(56) References cited:
- EP-A- 1 717 158
- WO-A-94/12826
- DE-A1- 2 021 175
- DE-U1- 29 813 832
- US-A- 3 223 296

## Description

The present invention relates to a fluid valve such as known from document DE 2021175 A1, which discloses a valve according to the preamble of claim 1.

Many examples thereof are known in the prior art In particular, it is an object of the invention to provide a fluid valve which cannot be operated accidentally and which requires a separate operating member. In addition, it is an object to embody this operating valve as a multifunctional operating valve. It is furthermore an object to make the valve of particularly simple and to make it suitable for many applications, such as in packaging and couplings for fluids, etc.

This object is achieved with an above-described valve in that it comprises a housing having a displaceable and in particular rotatable valve body arranged therein, said housing and said valve body being provided with interacting passages for providing a fluid passage which can be closed by displacement and in particular rotation, said housing and said valve body being embodied such that said fluid passage extends from the exterior of said housing at one end of said housing, through the wall of the housing, the wall of said valve body to the interior thereof, from the interior of the valve body to the interior of the housing at the other end of said housing, an operating valve being present which can be introduced into the interior of said housing from the other end of said housing into said housing, said valve body and said operating element being provided with interacting coupling means, which are embodied such that when the operating element is displaced, for example rotated, the valve body is displaced, for example rotated, and said housing and/or said operating element are provided with locking means for locking engagement of said operating element and said housing in the open position of said fluid passage.

According to the present invention, a valve is provided in which the operating element cannot be removed from the housing in the open position of the valve. The operating element can only be removed in the closed position of the valve. In addition, the valve body is located inside the housing so that it cannot be accessed in another manner to be operated. Displacement of the valve body with respect to the housing can only be provided in combination with the operating element.

According to an advantageous embodiment of the invention, the operating element itself is provided with an interior fluid passage which is preferably connected to the interior fluid passage, which is preferably present in a valve body. As a result thereof, the operating element is not only suitable for operating the valve body, but also acts as an outflow/inflow opening for the related fluid.

According to a further advantageous embodiment, the operating element is provided with further connecting means on that side which is not coupled to the valve body. As a result, the valve according to the present invention can be used as a coupling in any kind of conduit and further extension by any conceivable structure is possible.

The sealing action between the housing and the valve body can be produced in any conceivable way- Thus, it is possible to provide a cylindrical blind bore in the valve body and to provide an opening at the head end in the blind part. The valve body can also be provided with a head end and an opening can also be provided in the head end. By also realising the valve body to be cylindrical, the respective openings can be aligned through rotation

According to another variant of the present invention, in which both the interior of the housing and the exterior of the valve body are cylindrical, the openings are provided in the cylinder wall.

The valve body is preferably provided with any suitable sealing, at least in the region which is situated around the opening in the housing in the closed position of the valve. Obviously, the housing can also be provided with such a sealing. Such a sealing may produce a slight increase in the valve body/the housing which, in that case, is preferably made from a more elastic material than the remainder of the housing or the valve body, respectively.

The combined valve body and housing can be produced in a particularly simple manner by injection-moulding, more particularly by means of the so-called 2K technique. With this method, the valve body is produced by injection-moulding in a first step. Subsequently, the valve body is used as an insert for the housing to be injection-moulded. As a result of the shrinkage of the relevant plastic material which occurs after injection-moulding of the housing, the valve body will be accommodated inside the housing with a very accurate fit. In this way, a valve can be produced in an automated and inexpensive manner.

According to a further advantageous embodiment of the invention, the operating element drives the valve body by means of interacting projections/cavities. The lock between operating element and housing can also be provided with locking projections and cavities.

The invention also relates to a packaging for fluid in which the above-described valve is used. More particularly, the housing forms part of the pouring aperture. In this case, the opening of the housing is situated in the interior of the optionally flexible packaging and that part of the housing to which the operating element has to be coupled is situated on the outside.

By providing the opening in the housing as close as possible to the "top edge" of the packaging, it is possible, without having to take special measures, to fill a packaging of this type with as little air and the like as possible using the same housing and the valve body provided therein, as the filling opening is situated close to the top side of the packaging. Due to the particular structure of the above-described valve, for example the fact that it cannot simply be operated from outside without a separate operating element, it can be used for substances which could cause damage to the surroundings if they are released. In this case, ink for use with printers is mentioned by way of example. If such ink leaks, it can cause highly undesirable stains and worse damage, but such stains can be prevented due to the structure according to the present invention. After all, if the operating element forms part of an ink receiving duct of a printer or the like, the structure of the valve ensures that no leakage can take place. As described above, an axially substantially non-displaceable connection has to be provided first between the operating element and the housing before the valve body can be opened by rotation. The same applies to releasing the connection between the operating element and the housing again. This connection can only be released when the valve has been closed completely.

The above-described valve can also be used as coupling in combination with many types of device. As non-limiting examples, filters which have to be replaced, pumps which should be replaceable and all other kinds of constructions where replacement without problems with fluid flowing out is essential are mentioned here.

The invention will be explained in more detail below with reference to exemplary embodiments illustrated in the drawing, in which:
Fig. 1 shows the various parts which make up the valve according to a first referred embodiment of the invention;
Fig. 2 shows a partially cut-away view of the valve from Fig. 1 with the valve body and the housing being fitted inside one another in the closed position of the valve;
Fig. 3 shows the combination of housing, valve body and operating element in the open position;
Fig. 4 shows a partially cut-away view of a further application of the invention; and
Fig. 5 shows another possible application of the device according to the invention.

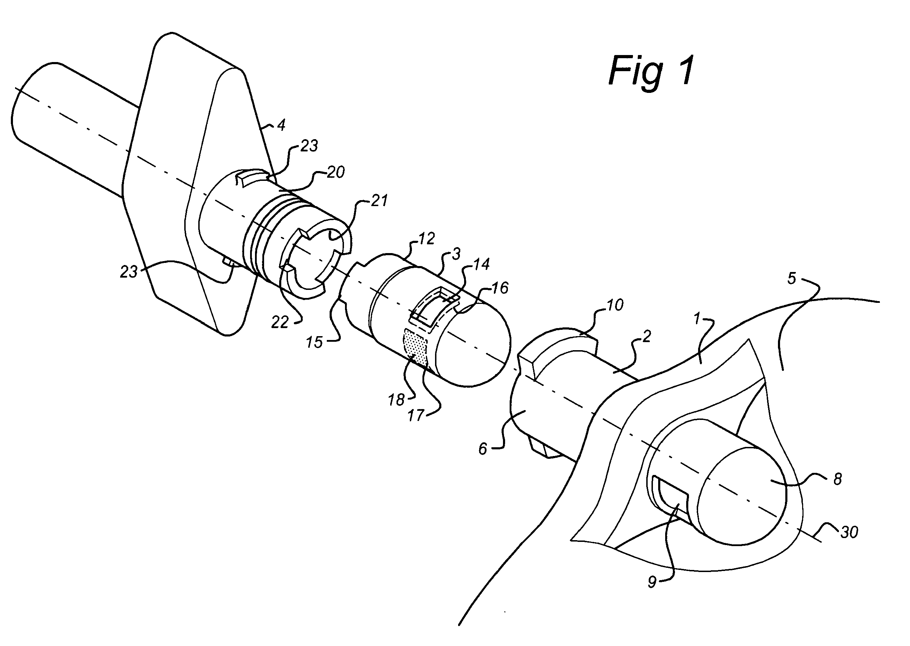

Figs. 1-3 show a first embodiment of the valve according to the invention. In this case, the valve is denoted overall by reference numeral 1 and comprises a housing 2 with a valve body 3 accommodated therein. Valve body 3 can be rotated along centre axis 30 in order to produce an opening/closing movement with the operating element 4. Fig. 1 shows details of the various parts.

In this embodiment, the housing 2 is connected in a fluid-tight manner to a bag (not shown in detail) in such a manner that the sleeve-shaped part 6 of the housing partially protrudes from this bag and the blind end 8 extends into the bag. Such a flexible bag can, of course, be replaced by any packaging which is known in the prior art. By way of example, the use of a flexible bag for containing ink for copying purposes is mentioned here. Such bags have to be replaced regularly and in this case it is highly undesirable that ink is spilt, due to the highly adverse effect this has.

The part of the housing 2 which extends into the bag 5 is provided with an opening 9.

The sleeve-shaped part 6 extending outside the bag 5 is provided with projecting parts which are provided with an internal recess 7.

The valve body 3 also comprises a sleeve-shaped part 12 which is embodied to be able to rotate about centre axis 30 in the housing 2, as indicated above. The sleeve-shaped part 12 comprises an internal duct 13. This duct 13 may extend along the entire length of the sleeve-shaped part 12, that is to say the end shown in Fig. 6 may be open. However, it is also possible for this to be closed. The sleeve-shaped part 12 is provided with operating projections 15 in order to be able to rotate the sleeve-shaped part.

The sleeve-shaped part 12 is provided with an opening 14. This opening 14 is provided in such a manner that, in the desired open position, the opening 14 is lined up with opening 9, so that a passage opening is created. A sealing line 16 is arranged around the opening 14 which ensures that a good seal is provided between the tube-shaped part 6 and tube-shaped part 12 at the opening. Such a sealing line may be made of plastic which is softer than the plastic from which the valve body 3 is made and can, for example, be produced by means of a so-called 2K injection-moulding process together with the valve body. In addition, further sealing lines may be present in order to ensure complete sealing of the valve body 3 with respect to the housing.

It is possible to assemble the valve body 3 and the housing 2 after they have been produced. Through a difference in temperature, that is to say by giving the valve body 3 a lower temperature than the tube-shaped part 12, an accurate fit can be achieved. In addition, it is possible to produce the housing and the valve body 3 by means of a 2K injection-moulding process. Therein, the valve body 3 is preferably injection-moulded first and the housing is injection-moulded subsequently with the valve body being used as insert. In this manner, a particularly low tolerance between both parts can be achieved and it is furthermore possible to lock the valve body inside the housing.

In addition, the sleeve-shaped part 12 of a further sealing line 17 may be provided which ensures that no liquid can leak through opening 9 in the closed position. In practice, this sealing 17 is often more important than sealing 6.

The operating element 4 comprises a tube-shaped part 20 in the interior of which a duct 21 is delimited. At the end which is to be combined with the housing 2, the sleeve-shaped part 20 is provided with a recess 22, the shape of which corresponds to that of projection 15. In addition, a projection 23 is provided, the shape of which corresponds to that of the recess 7 in the housing 2.

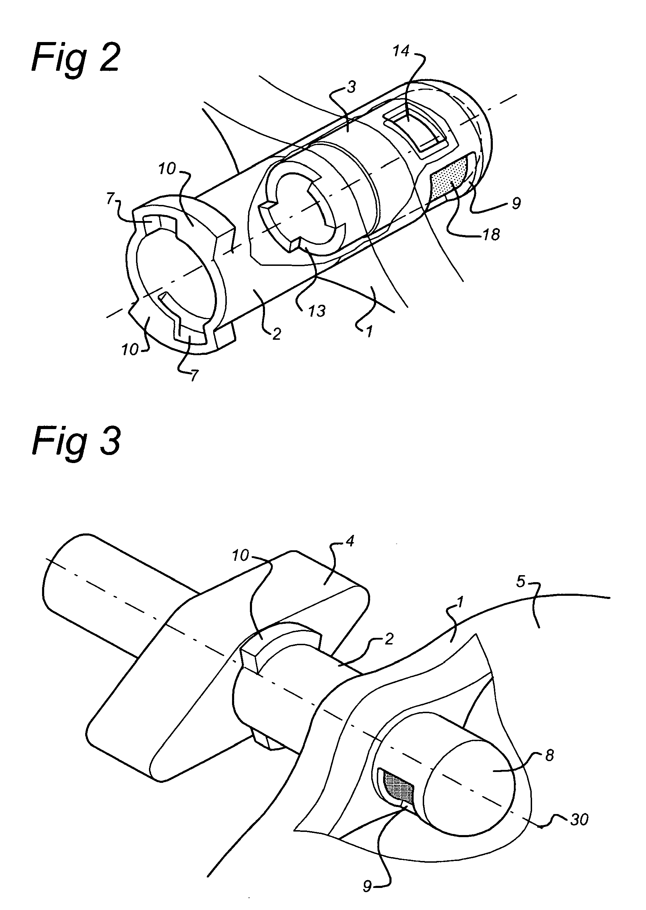

Fig. 2 shows the state after production, in which part 18 is situated in front of opening 9, that is to say that the valve is in the closed position.

In order to open the valve according to the invention, operating element 4 has to be introduced into housing 2 along centre axis 30 or coupled thereto, respectively. Due to the presence of projection 23 and the embodiment of recess 7, operating element 4 can only move in housing 2 in a discrete rotation position with respect to housing 2. In any other position, it is not possible to displace the projection 23 in recess 7. According to the present invention, all this is effected in such a manner that, in this position, projection 15 is situated exactly in front of recess 22 when the valve is in the closed position, so that this does not form an obstacle displacing the operating element in the housing 2. Subsequently, the operating element can only be rotated in one direction. This sole possibility for rotation is determined by the recess 7. Recess 7 extends across a larger angle range than projection 23, but due to the presence of the edge 10, the angle range for the introduction of projection 23 is exactly as large as the size of projection 23. However, as soon as projection 23 has been introduced into the recess 7, projection 23 can be moved under the edge 10 and rotation becomes possible. Already at the slightest rotation, it will no longer be possible to remove the operating element 4 from the housing because this is blocked by the edge 10.

During rotation, the valve body 3 will also rotate in the same direction, as a result of which the opening 9 will be aligned with opening 14. As a result thereof, a passage opening is produced, comprising opening 9, opening 14, duct 13 and the operating element duct 21 which is connected thereto. This duct 21 also serves as outflow opening for the valve and can optionally be coupled further.

As has been indicated above, the operating element 4 can only be removed from the housing by returning it to the introduction position. This automatically makes it possible to close the valve body 3 again, and more particularly the opening 14, with respect to the housing.

The present structure ensures that the actual valve is situated inside the bag in front of the material which is inside the bag 5 or other packaging. That is to say, that there is no danger of further material flowing out after the valve has been closed. In addition, it is possible to readily fill such packaging with the desired material which is to be packaged.

Furthermore, it is ensured in this manner that no air enters the packaging during filling, which may be important for certain products.

Tamper-proof structures which are known from the prior art may be provided. Thus, it is possible to provide the open end of the housing 2 with a sealing membrane which has to be pierced during or before the operating element 4 is put in place.

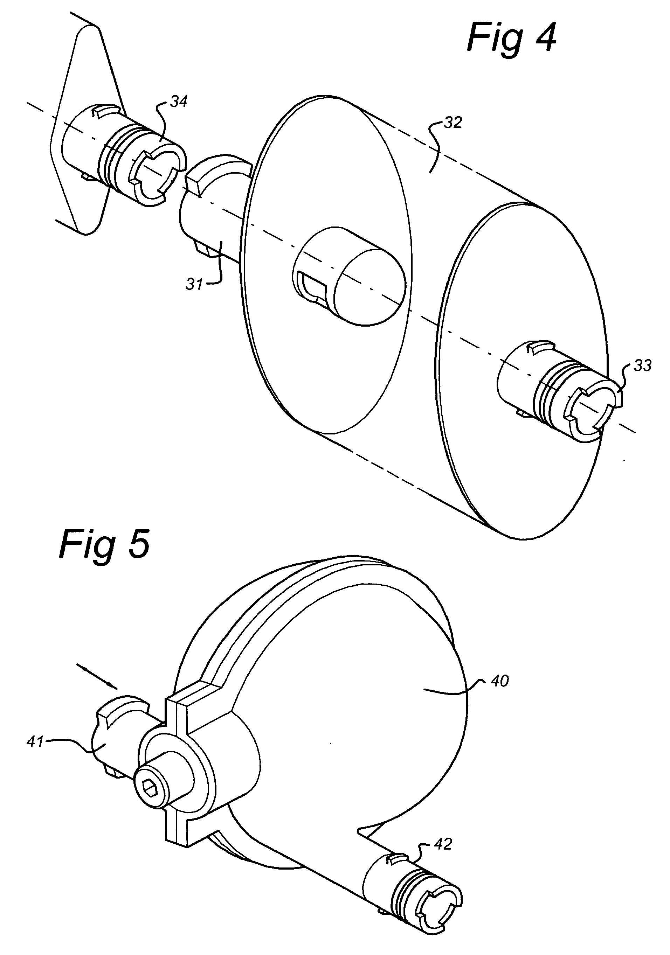

Fig. 4 shows a further possible application of the present invention which comprises a combination of a valve 31, a housing 32 and a connecting stub 33. A filter (not shown in more detail) is, for example, accommodated in the housing, as a result of which the assembly works as a filter coupling. This filter can readily be coupled to a fluid line in the above-described manner, said fluid line terminating as an operating element. Such an operating element is denoted by reference numeral 34 and, by coupling the latter in the manner described above with reference to Figs. 1-3, it is possible to produce a fluid connection between the interior of housing 32 and the line which ends in operating element 34. Connecting stub 33 is embodied to be coupled to a packaging.

Fig. 5 shows a further variant. In this case, the valve according to the invention is denoted by reference numeral 41 and can be coupled to a further line (not shown) in the abovementioned manner. Reference numeral 40 denotes a pump assembly. The discharge stub is denoted by reference numeral 42. In this case, too, it is ensured that the coupling between the valve 41 and a further part can only be achieved in the closed position.

After reading the above, the person skilled in the art will understand that the valve and the coupling according to the invention, respectively, can be coupled to any structure which is known in the prior art. The invention is of particular importance in those cases where two parts have to be coupled together without fail and in a certain order and where it always has to be ensured that no fluid can flow during coupling. Only after the connection between the two parts to be coupled is perfect can the flow of fluid be started using the same coupling movements.

## Claims

1. Fluid valve (1) comprising a housing (2) having a displaceable valve body (3) arranged therein, said housing and said valve body being provided with interacting passages (9, 14) for providing a fluid passage which can be closed by displacement, said housing and said valve body being embodied such that said fluid passage extends from the exterior of said housing at one end of said housing, through the wall of the housing, the wall of said valve body to the interior thereof, from the interior of the valve body to the interior of the housing at the other end of said housing, an operating element (4) being present, said valve body and said operating element being provided with interacting coupling means (15, 22), which are embodied such that, when the operating element is displaced, the valve body is displaced **characterised in that** said operating element (4) can be introduced into the interior of said housing from the other end of said housing into said housing and said housing and/or said operating element are provided with locking means for locking engagement of said operating element and said housing in the open position of said fluid passage.

2. Valve according to Claim 1, wherein the displacement comprises rotation.

3. Valve according to Claim 1 or 2, wherein said operating element comprises an interior fluid passage (21) which, in the introduced position of said operating element, is connected to the interior of said housing at the other end of said housing.

4. Valve according to Claim 3, wherein the part of the operating element which is turned away from the part which is introduced into said housing is provided with further connecting means.

5. Valve according to one of the preceding claims, wherein the interior of said housing comprises a blind bore and the valve body is of a cylindrical embodiment so as to fit therein.

6. Valve according to Claim 5, wherein the passage opening between the housing and the operating element is situated in a plane which is substantially parallel to the centre axis (30) of said bore.

7. Valve according to one of the preceding claims, wherein the valve body (3), on the introduction side of the operating element, is provided with an entrainment projection/cavity and the operating element is provided with an entrainment cavity/projection interacting with the latter.

8. Fluid packaging comprising a valve according to one of the preceding claims.

9. Packaging according to Claim 8, wherein the passage opening between the housing and operating element is situated in the interior of said packaging and the other part of said housing is situated on the outside of the packaging.

10. Packaging according to one of Claims 8 or 9, wherein said packaging comprises a flexible bag.

11. Packaging according to Claim 10, wherein said bag comprises a metallic sealed layer.

12. Packaging for ink comprising a packaging according to Claim 10 or 11.

13. Fluid coupling comprising a fluid valve according to one of the preceding claims wherein one part of the coupling is formed by a housing and valve body and the other part of the coupling is formed by the operating element.

## Patentansprüche

1. Fluidventil (1), das ein Gehäuse (2) mit einem verstellbaren Ventilkörper (3) darin aufweist, wobei das Gehäuse und der Ventilkörper mit miteinander wechselwirkenden Durchgängen (9, 14) zur Bereitstellung eines Fluiddurchgangs, der durch Verstellung geschlossen werden kann, versehen sind, wobei das Gehäuse und der Ventilkörper derart ausgeführt sind, dass der Fluiddurchgang sich an einem Ende des Gehäuses von außerhalb des Gehäuses durch die Wand des Gehäuses, die Wand des Ventilkörpers zu dessen Innerem, vom Inneren des Ventilkörpers zum Inneren des Gehäuses am anderen Ende des Gehäuses erstreckt, wobei ein Bedienelement (4) vorhanden ist, wobei der Ventilkörper und das Bedienelement mit wechselwirkenden Kopplungseinrichtungen (15, 22) versehen sind, die derart ausgeführt sind, dass der Ventilkörper verstellt wird, wenn das Bedienelement verlagert wird, **dadurch gekennzeichnet, dass** das Bedienelement (4) in das Innere des Gehäuses von dem anderen Ende des Gehäuses in das Gehäuse eingeführt werden kann und das Gehäuse und/oder das Bedienelement mit Arretiereinrichtungen versehen sind, um den Eingriff des Bedienelement und des Gehäuses in der offenen Position des Fluiddurchgangs zu arretieren.

2. Ventil nach Anspruch 1, wobei die Verstellung eine Drehung aufweist.

3. Ventil nach Anspruch 1 oder 2, wobei das Bedienelement einen inneren Fluiddurchgang (21) aufweist, der in der eingeführten Position des Bedienelements am anderen Ende des Gehäuses mit dem Inneren des Gehäuses verbunden ist.

4. Ventil nach Anspruch 3, wobei der Teil des Bedienelements, der von dem Teil abgewendet ist, der in das Gehäuse eingeführt wird, mit weiteren Verbindungseinrichtungen versehen ist.

5. Ventil nach einem der vorhergehenden Ansprüche, wobei das Innere des Gehäuses eine Sackbohrung aufweist und der Ventilkörper eine zylindrische Ausführungsform hat, um in diese hinein zu passen.

6. Ventil nach Anspruch 5, wobei die Durchgangsöffnung zwischen dem Gehäuse und dem Bedienelement in einer Ebene gelegen ist, die im Wesentlichen parallel zur Mittelachse (30) der Bohrung ist.

7. Ventil nach einem der vorhergehenden Ansprüche, wobei der Ventilkörper (3) auf der Einführseite des Bedienelements mit einem Mitführungsvorsprung einer Aussparung versehen ist und das Bedienelement mit einer Mitführungsaussparung/ einemVorsprung versehen ist, der mit letzterem wechselwirkt.

8. Fluidverpackung, die ein Ventil nach einem der vorhergehenden Ansprüche aufweist.

9. Verpackung nach Anspruch 8, wobei die Durchgangsöffnung zwischen dem Gehäuse und dem Bedienelement im Inneren der Verpackung gelegen ist und der andere Teil des Gehäuses auf der Außenseite der Verpackung gelegen ist.

10. Verpackung nach einem der Ansprüche 8 oder 9, wobei die Verpackung einen flexiblen Beutel aufweist.

11. Verpackung nach Anspruch 10, wobei der Beutel eine metallische versiegelte Schicht aufweist.

12. Verpackung für Tinte, die eine Verpackung nach Anspruch 10 oder 11 aufweist.

13. Fluidkopplung, die ein Fluidventil nach einem der vorhergehenden Ansprüche aufweist, wobei ein Teil der Kopplung durch ein Gehäuse und einem Ventilkörper ausgebildet ist und der andere Teil der Kopplung durch das Bedienelement ausgebildet ist.

## Revendications

1. Vanne pour fluide (1) comprenant un logement (2) à l'intérieur duquel est agencé un corps de vanne déplaçable (3), ledit logement et ledit corps de vanne étant dotés de passages interagissant (9, 14) pour permettre un passage de fluide qui peut être fermé par déplacement, ledit logement et ledit corps de vanne étant réalisés de telle manière que ledit passage de fluide s'étende depuis l'extérieur dudit logement à une extrémité dudit logement, à travers la paroi du logement, la paroi dudit corps de vanne vers l'intérieur de celui-ci, depuis l'intérieur du corps de vanne vers l'intérieur du logement à l'autre extrémité dudit logement, un élément opérationnel (4) étant présent, ledit corps de vanne et ledit élément opérationnel étant dotés de moyens d'accouplement interagissant (15, 22), qui sont réalisés de telle manière que, lorsque l'élément opérationnel est déplacé, le corps de vanne est déplacé, **caractérisé en ce que** ledit élément opérationnel (4) peut être introduit à l'intérieur dudit logement depuis l'autre extrémité dudit logement dans ledit logement, et ledit logement et/ou ledit élément opérationnel sont dotés de moyens de verrouillage pour verrouiller la coopération dudit élément opérationnel et dudit logement dans la position ouverte dudit passage de fluide.

2. Vanne selon la revendication 1, dans lequel le déplacement comprend la rotation.

3. Vanne selon la revendication 1 ou 2, dans lequel ledit élément opérationnel comprend un passage de fluide intérieur (21) qui, dans la position introduite dudit élément opérationnel, est raccordé à l'intérieur dudit logement à l'autre extrémité dudit logement.

4. Vanne selon la revendication 3, dans laquelle la partie de l'élément opérationnel qui est orientée à l'opposé de la partie qui est introduite dans ledit logement est dotée de moyens de raccordement supplémentaires.

5. Vanne selon l'une des revendications précédentes, dans laquelle l'intérieur dudit logement comprend un alésage borgne et le corps de vanne se présente sous la forme d'un mode de réalisation cylindrique afin de s'emboîter à l'intérieur.

6. Vanne selon la revendication 5, dans lequel l'ouverture de passage entre le logement et l'élément opérationnel est située dans un plan qui est sensiblement parallèle à l'axe central (30) dudit alésage.

7. Vanne selon l'une des revendications précédentes, dans laquelle le corps de vanne (3), du côté introduction de l'élément opérationnel, est doté d'une saillie/cavité d'entraînement et l'élément opérationnel est doté d'une cavité/saillie d'entraînement interagissant avec cette dernière.

8. Conditionnement pour fluide comprenant une vanne selon l'une des revendications précédentes.

9. Conditionnement selon la revendication 8, dans lequel l'ouverture de passage entre le logement et l'élément opérationnel est située à l'intérieur dudit conditionnement et l'autre partie dudit logement est située sur l'extérieur du conditionnement.

10. Conditionnement selon les revendications 8 ou 9, dans lequel ledit conditionnement est constitué par un sac souple.

11. Conditionnement selon la revendication 10, dans lequel ledit sac comprend une couche étanche métallique.

12. Conditionnement pour encre comprenant un conditionnement selon la revendication 10 ou 11.

13. Raccord hydraulique comprenant une vanne pour fluide selon l'une des revendications précédentes, dans lequel une partie du raccord est formée par un logement et un corps de vanne et l'autre partie du raccord est formée par l'élément opérationnel.
